(19) **Europäisches Patentamt**

**European Patent Office**

**Office européen des brevets**

(11) Veröffentlichungsnummer: **0 336 078 B1**

(12) **EUROPÄISCHE PATENTSCHRIFT**

(45) Veröffentlichungstag der Patentschrift: **21.10.92**

(21) Anmeldenummer: **89102591.8**

(22) Anmeldetag: **15.02.89**

(51) Int. Cl.⁵: **H02K 29/08**, G01P 3/46

(54) Anordnung zur Drehzahl- und Rotorlageerfassung einer elektrischen Maschine.

(30) Priorität: **29.02.88 DE 3806438**

(43) Veröffentlichungstag der Anmeldung:
**11.10.89 Patentblatt 89/41**

(45) Bekanntmachung des Hinweises auf die Patenterteilung:
**21.10.92 Patentblatt 92/43**

(84) Benannte Vertragsstaaten:
**CH DE ES FR GB IT LI SE**

(56) Entgegenhaltungen:
**EP-A- 0 023 123**
**EP-A- 0 193 929**
**DE-A- 3 609 218**
**US-A- 4 645 961**

(73) Patentinhaber: **SIEMENS AKTIENGESELL-SCHAFT**
**Wittelsbacherplatz 2**
**W-8000 München 2(DE)**

(72) Erfinder: **Bieber, Joachim, Dipl.-Ing.**
**Neuhauserstrasse 10**
**W-8740 Bad Neustadt(DE)**
Erfinder: **Frank, Manfred, Dipl.-Ing.**
**Veitstrasse 5**
**W-8741 Heustreu(DE)**
Erfinder: **Schneider, Wolfgang, Dipl.-Ing.**
**Buttlarstrasse 37**
**W-6400 Fulda(DE)**

## Beschreibung

Die Erfindung betrifft eine Anordnung zur Drehzahl- und Rotorlageerfassung einer elektrischen Maschine gemäß dem Oberbegriff des Anspruches 1.

Eine solche Anordnung ist durch die US-PS 4 364 005 bekannt. Um den Tachogenerator und den Rotorlagegeber in axialer Richtung möglichst platzsparend zusammenbauen zu können, ohne daß eine gegenseitige unerwünschte Beeinflussung erfolgt, ist zwischen den beiden Maschinen ein magnetischer Schild eingefügt. Ein solcher Schild stellt eine inaktive Masse dar und seine Anordnung zwischen den beiden Maschinen erfordert einen entsprechenden Montageaufwand.

Der Erfindung liegt die Aufgabe zugrunde, bei einer Anordnung gemäß dem Gattungsbegriff des Anspruches 1, einen möglichst engen axialen Zusammenbau des Tachogenerators und des Rotorlagegebers zu erreichen, ohne daß es passiver Abschirmelemente zur Vermeidung einer gegenseitigen, nachteiligen Beeinflussung bedarf.

Die Lösung der gestellten Aufgabe gelingt durch die im Kennzeichen des Anspruches 1 angegebenen Merkmale. Durch die beschriebene Anordnung der ersten und zweiten Permanentmagnete an dem Läuferkörper des Rotorlagegebers wird eine hohe Steilheit beim Polaritätswechsel der Induktion des Rotorlagegebers erreicht, so daß sich nur äußerst geringe Schaltpunktabweichungen der Sensorelemente ergeben. Außerdem wirken vor allem die zweiten Permanentmagnete derart auf die Ständerwicklung des Tachogenerators, daß die Welligkeit der in dieser Ständerwicklung induzierten drehzahlproportionalen Spannung stark verringert wird, so konnte eine Restwelligkeit von ca. 0,5 % festgestellt werden.

Günstig für die Verminderung der Spannungswelligkeit wirkt es sich aus, wenn die zweiten Permanentmagnete axial außerhalb zu den ersten Permanentmagneten angeordnet sind.

Die Einbettung der ersten und zweiten Permanentmagnete in den aus Kunststoff bestehenden Läuferkörper bringt herstellungstechnische Vorteile.

Anhand eines in der Zeichnung dargestellten Ausführungsbeispieles wird der Anmeldungsgegenstand nachfolgend näher beschrieben. Es zeigt:

FIG 1    eine aus einem Tachogenerator und einem Rotorlagegeber bestehende Anordnung im Schnitt,

FIG 2    eine Ansicht des Läuferkörpers des Rotorlagegebers,

FIG 3    eine Ansicht des Läufers des Tachogenerators,

FIG 4    eine Abwicklung des Tachogeneratorläufers und des Läuferkörpers des Rotorlagegebers.

Mit 1 ist der Läufer des Tachogenerators und mit 2 der Läuferkörper des Rotorlagegebers der Anordnung bezeichnet. Am Umfang des Tachogeneratorläufers 1 sind Permanentmagnete 3 in sechspoliger Anordnung vorgesehen. Die Permanentmagnete 3 sind auf dem Läufer 1 aufgeklebt und/oder durch eine sie umschließende Bandage 4 gehalten. Auf einem als Hohlzylinder ausgebildeten Träger 5 aus Kunststoff oder einem anderen geeigneten amagnetischen Material ist die Ständerwicklung 6 des Tachogenerators angeordnet. Die axiale Weite der einzelnen Spulen der Ständerwicklung 6 ist größer als die axiale Länge der Permanentmagnete 3 bemessen. Der Träger 5 ist in ein den Tachogeneratorläufer umschließendes Rückschlußjoch 7 eingesetzt, welches sich in axialer Richtung auch über den Läuferkörper 2 des Rotorlagegebers erstreckt. In den Luftspalt 8 zwischen dem Läuferkörper 2 und dem Rückschlußjoch 7 ragen Hallsensoren 9, die an einer Trägerplatte 10 befestigt sind, die außerdem mit einer Auswerteelektronik bestückt ist.

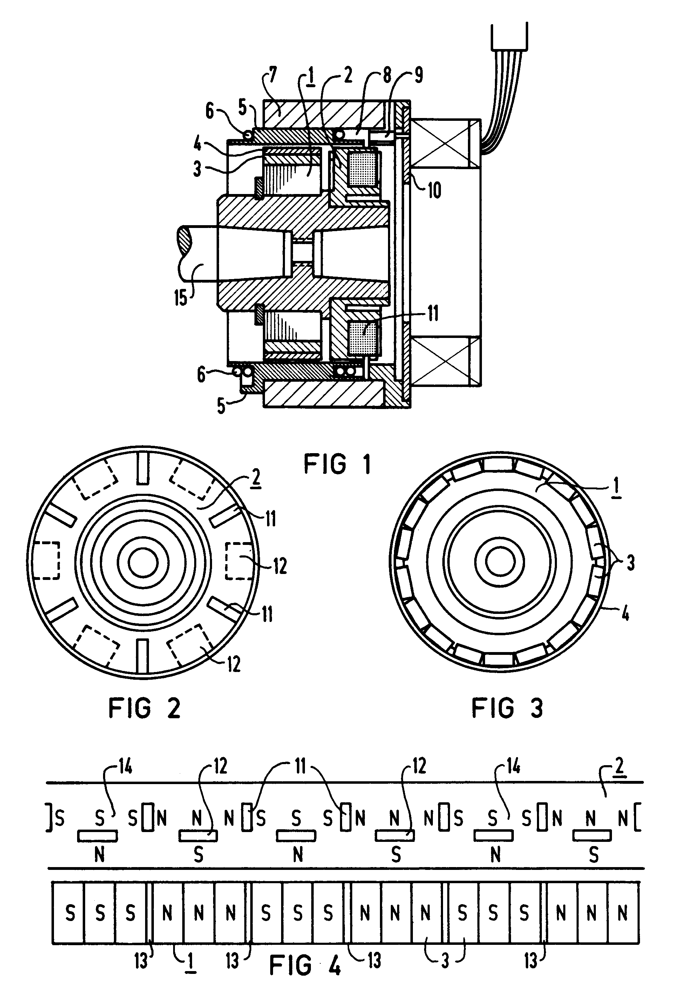

Wie aus den Figuren 2 und 4 zu ersehen ist, ist der Läuferkörper 2 des Rotorlagegebers mit ersten und zweiten Permanentmagneten 11 und 12 bestückt. Diese Permanentmagnete 11 und 12 sind in den aus Kunststoff bestehenden Läuferkörper eingebettet. Aus fertigungstechnischen Gründen werden diese Permanentmagnete 11 und 12 bei der Herstellung des Läuferkörpers 2 gleich in diesen mit eingespritzt. Aus der abgewickelten Darstellung des Tachogeneratorläufers 1 und des Läuferkörpers 2 in FIG 4 ist insbesondere die Polung und die Anordnung der ersten und zweiten Permanentmagnete 11 und 12 zueinander und im bezug auf die Permanentmagnete 3 des Tachogeneratorläufers 1 zu ersehen.

Die ersten Permanentmagnete 11 sind in Richtung des Umfanges des Läuferkörpers 2, d.h. tangential magnetisiert und mittig zu den Pollücken 13 des Tachogeneratorläufers 1 angeordnet. Hinsichtlich ihrer magnetischen Polarität sind die ersten Permanentmagnete 11 so angeordnet, daß die einander zugewandten Seiten von zwei in Umfangsrichtung aufeinanderfolgenden ersten Permanentmagnete 11 die gleiche Polarität, nämlich Südpol S oder Norpol N aufweisen, wobei diese Polarität ferner der Polarität des Magnetpoles des Tachogeneratorläufers 1 entspricht, der axial beabstandet zwischen den betreffenden beiden ersten Permanentmagneten 11 liegt. D.h. bei einer Ausbildung des Magnetpoles des Tachogeneratorläufers 1 als Südpol sind die beiden, den diesen Südpol begrenzenden Pollücken 13 gegenüberliegenden ersten Permanentmagnete 11 mit ihren Südpolen S einander zugewandt. Dementsprechend sind die beiden ersten Permanentmangete 11 mit ihren Nordpolen N einander zugewandt, wenn der von ihnen eingegrenzte Magnetpol des Tachogeneratorläufers 1 ein Nordpol ist.

In dem Bereich zwischen zwei ersten Permanentmagneten 11 ist jeweils ein zweiter Permanentmagnet 12 an dem Läuferkörper 2 angeordnet. Die Lage dieser zweiten Permanentmagnete 12 ist so getroffen, daß sie auf der dem Tachogeneratorläufer 1 zugewandten Seite des Läuferkörpers 2 axial außerhalb des durch zwei benachbarte erste Permanentmagnete 11 gebildeten Zwischenraumes 14 liegen. Die zweiten Permanentmagnete 12 sind in Umfangsrichtung mittig zwischen jeweils zwei ersten Permanentmagneten 11 angeordnet und axial, d.h. in Richtung der Drehachse 15 magnetisiert. Hinsichtlich ihrer magnetischen Polung sind die zweiten Permanentmagnete 12 so ausgerichtet, daß die Polarität der dem Tachogeneratorläufer 1 zugewandten Seite jedes der zweiten Permanentmagnete 12 der Polarität des axial benachbarten Magnetpoles des Tachogeneratorläufers 1 entgegengesetzt ist. D.h. einem Nordpol des Tachgeneratorläufers 1 liegt der Südpol S des betreffenden zweiten Permanentmagneten 12 und einem Südpol des Tachogeneratorläufers 1 dementsprechend der Nordpol N des betreffenden zweiten Permanentmagneten 12 gegenüber. Durch diese Ausrichtung der zweiten Permanentmagnete 12 ergibt es sich, daß die Polarität der dem Zwischenraum 14 zugewandten Seite der zweiten Permanentmagnete 12 der Polarität entspricht, die die beiden einander zugewandten Seiten der beiden den betreffenden Zwischenraum 14 begrenzenden ersten Permanentmagnete 11 aufweisen.

Durch eine solche Anordnung der ersten und zweiten Permanentmagnete 11 und 12 wird einerseits eine geringe Schaltpunktabweichung der von den Hallsensoren gelieferten Signale erreicht. Dies ist dadurch bedingt, daß die durch die Permanentmagnete hervorgerufene Induktionskurve sehr steil verläuft, wobei dieser steile Verlauf noch durch die Anordnung der Hallsensoren 9 in dem Luftspalt 8 zwischen dem Läuferkörper 2 und dem Rückschlußjoch 7 begünstigt wird, da der von den Permanentmagneten 11 und 12 des Läuferkörpers 2 ausgehende magnetische Fluß durch das Rückschlußjoch 7 konzentriert wird. Andererseits konnte bei der beschriebenen Anordnung der ersten und zweiten Permanentmagnete 11 und 12 eine Verminderung der Welligkeit der von dem Tachogenerator gelieferten Spannung festgestellt werden, obwohl der Läuferkörper 2 des Rotorlagegebers sehr nahe an den Tachogeneratorläufer 1 herangerückt ist und damit die Baugröße der Anordnung wesentlich verringert ist.

Die Toleranz hinsichtlich des axialen Versatzes zwischen der Ständerwicklung 6 und dem Läufer 1 des Tachogeneators ist ausserdem erheblich vergrößert, ohne daß dies nachteilige Auswirkungen auf die Tachospannung hat.

**Patentansprüche**

1. Anordnung zur Drehzahl- und Rotorlageerfassung einer elektrischen Maschine, welche Anordnung aus einem Tachogenerator, der einen permanentmagneterregten Läufer und eine mehrphasige Ständerwicklung aufweist und einem zu diesem in axialem Abstand achsgleich angeordneten Rotorlagegeber besteht, der einen mit Permanentmagneten versehenen Läuferkörper besitzt, um dessen Umfang magnetfeldempfindliche Sensorelemente mit einem dem Polabstand entsprechenden Umfangsabstand angeordnet sind, **dadurch gekennzeichnet,** daß an dem aus amagnetischem Material bestehenden Läuferkörper (2) in einem den Pollücken (13) des Tachogeneratorläufers (1) entsprechenden Abstand erste, in tangentialer Richtung magnetisierte Permanentmagnete (11) mittig zu diesen Pollücken (13) derart angeordnet sind, daß die einander zugewandten Seiten von zwei benachbarten Permanentmagneten (11) die gleiche Polarität (S oder N) wie der sich zwischen den betreffenden Pollücken (13) erstreckende Magnetpol (N bzw. S) des Tachogeneratorläufers (1) aufweisen, daß ferner auf der dem Tachogeneratorläufer (1) benachbarten Seite des Läuferkörpers (2) mittig zu je zwei ersten Permanentmagneten (11) jeweils mindestens ein in Richtung der Drehachse (15) magnetisierter zweiter Permanentmagnet (12) derart angeordnet ist, daß seine dem Tachogeneratorläufer (1) zugewandte Seite die entgegengesetzte Polarität (N bzw. S) wie der gegenüberliegende Magnetpol des Tachogeneratorläufers (1) aufweist.

2. Anordnung nach Anspruch 1, **dadurch gekennzeichnet,** daß die zweiten Permanentmagnete (12) axial außerhalb zu den ersten Permanentmagneten (11) am Läuferkörper (2) angeordnet sind.

3. Anordnung nach Anspruch 1 oder 2, **dadurch gekennzeichnet,** daß der Läuferkörper (2) aus Kunststoff besteht und die ersten und zweiten Permanentmagnete (11 und 12) in diesen eingebettet sind.

4. Anordnung nach Anspruch 1, 2 oder 3, **dadurch gekennzeichnet,** daß als magnetfeldempfindliche Sensorelemente Hallsensoren (9) vorgesehen sind.

5. Anordnung nach Anspruch 4, **dadurch gekennzeichnet,** daß den Hallsensoren (9) ein magnetisch leitfähiger Rückschluß zugeordnet ist.

6. Anordnung nach Anspruch 5, **dadurch gekennzeichnet,** daß der Rückschluß durch eine Verlängerung des Rückschlußjoches (7) des Tachogenerators gebildet ist.

7. Anordnung nach einem oder mehreren der vorhergehenden Ansprüche, **dadurch gekennzeichnet,** daß als Permanentmagnete (3, 11, 12) Selten-Erd-Magnete verwendet sind.

## Claims

1. Arrangement for the measurement of the rotational speed and the position of a rotor of an electric machine, which arrangement consists of a tacho-generator having a permanent-magnet-excited rotor and a multiphase stator winding, and a rotor-position sensor arranged coaxially with the tacho-generator at an axial distance, the rotor-position sensor having a rotor body provided with permanent magnets, about the circumference of which rotor body sensor elements sensitive to magnetic fields are arranged with a circumferential spacing corresponding to the phase spacing, characterized in that on the rotor body (2), which rotor body consists of non-magnetic material, at a spacing corresponding to the pole gaps (13) of the tacho-generator rotor (1) first permanent magnets (11) magnetized in the tangential direction are arranged centrally to these pole gaps (13) in such a way that the sides of two adjacent permanent magnets (11) which face one another have the same polarity (S or N) as the magnetic pole (N or S) of the tacho-generator rotor (1) which extends between the relevant pole gaps (13), and characterized in that, moreover, on the side of the rotor body (2) adjacent to the tacho-generator rotor (1) there is arranged centrally to respective two first permanent magnets (11) at least one second permanent magnet (12), magnetized in the direction of the rotary axis (15), in such a way that its side which faces the tacho-generator rotor (1) has the opposite polarity (N or S) to the opposite magnetic pole of the tacho-generator rotor (1).

2. Arrangement according to claim 1, characterized in that the second permanent magnets (12) are arranged axially outside the first permanent magnets (11) on the rotor body (2).

3. Arrangement according to claim 1 or 2, characterized in that the rotor body (2) consists of plastics and the first and second permanent magnets (11 and 12) are embedded therein.

4. Arrangement according to claim 1, 2 or 3, characterized in that Hall sensors (9) are provided as sensor elements which are sensitive to magnetic fields.

5. Arrangement according to claim 4, characterized in that a magnetically conductive return is associated with the Hall sensors (9).

6. Arrangement according to claim 5, characterized in that the return is formed by an extension of the return yoke (7) of the tacho-generator.

7. Arrangement according to one or several of the preceding claims, characterized in that rare-earth magnets are used as permanent magnets (3, 11, 12).

## Revendications

1. Dispositif pour détecter la vitesse de rotation et la position du rotor d'une machine électrique, ce dispositif étant constitué par un générateur tachymétrique qui possède un rotor à excitation par des aimants permanents, et un enroulement statorique polyphasé, et par un transmetteur de la position du rotor qui est monté coaxialement au rotor et à une certaine distance axiale du rotor, et qui possède un corps de rotor pourvu d'aimants permanents et sur la périphérie duquel sont disposés des éléments de détection sensibles au champ magnétique, et situés à une distance périphérique qui correspond à la distance entre les pôles, caractérisé par le fait que sur le corps (2) du rotor, réalisé en un matériau amagnétique, des premiers aimants permanents (11), aimantés dans la direction tangentielle, sont disposés à une distance qui correspond à l'espace interpolaire (13) du rotor (1) du générateur tachymétrique, dans une position centrée par rapport à ces espaces interpolaires (13) en sorte que les côtés, qui se font face, de deux aimants permanents voisins (11) possèdent la même polarité (S ou N) que le pôle magnétique (N ou S), qui s'étend entre les espaces interpolaires considérés (13), du rotor (1) du générateur tachymétrique, qu'en outre sur le côté du corps (2) du rotor, qui est voisin du rotor (1) du générateur tachymétrique, est disposé, en position médiane par rapport à deux premiers aimants permanents respectifs (11), respectivement au moins un second aimant permanent (12), aimanté dans la direction de l'axe de rotation (15), en sorte que le côté de cet aimant, tourné vers le rotor (1) du générateur tachymétrique, possède la polarité opposée (N ou S) à celle du pôle magnétique opposé du rotor (1) du générateur tachymétrique.

2. Dispositif suivant la revendication 1, caractérisé par le fait que les deux aimants permanents (12) sont disposés axialement à l'extérieur des premiers aimants permanents (11) sur le corps (2) du rotor.

3. Dispositif suivant la revendication 1 ou 2, caractérisé par le fait que le corps (2) du rotor est réalisé en une matière plastique et que les premier et second aimants permanents (11 et 12) sont enchâssés dans ce corps.

4. Dispositif suivant la revendication 1, 2 ou 3, caractérisé par le fait que des capteurs de Hall (9) sont prévus en tant qu'éléments de détection sensibles au champ magnétique.

5. Dispositif suivant la revendication 4, caractérisé par le fait qu'un retour magnétiquement conducteur est associé au capteur de Hall (9).

6. Dispositif suivant la revendication 5, caractérisé par le fait que la fermeture du circuit magnétique est assurée par un prolongement de la culasse de fermeture du circuit magnétique (7) du générateur tachymétrique.

7. Dispositif suivant une ou plusieurs des revendications précédentes, caractérisé par le fait qu'on utilise, comme aimants permanents (3,11,12), des aimants formés de terres rares.

FIG 1

FIG 2

FIG 3

FIG 4